# EUROPEAN PATENT SPECIFICATION

(11) **EP 0 617 213 B1**
(45) Date of publication and mention of the grant of the patent: **28.04.1999**
(21) Application number: 93113571.9
(22) Date of filing: 25.08.1993
(51) Int. Cl.: F16H 57/02, B60H 1/00

(54) **A motorized actuator apparatus and a base board for use therein**
Motorisiertes Betätigungsgerät und Basis-Tafel dafür
Actionneur motorisé et plaque de base

(30) Priority: 26.01.1993 JP 1667/93 U
(43) Date of publication of application: 28.09.1994
(73) Proprietor: ASMO CO., LTD., Kosai-shi Shizuoka-ken (JP)
(72) Inventor: Tsuchida, Masumi, c/o Asmo Co., Ltd., Kosai-shi, Shizuoka-ken (JP)
(74) Representative: Boeters, Hans Dietrich, Dr.

(56) References cited:
- DE-A- 2 831 537
- DE-A- 3 835 773
- US-A- 4 795 867
- PATENT ABSTRACTS OF JAPAN vol. 12, no. 218 (M-711) (3065) June 1988 & JP-A-63 017 108 (NIPPON DENSO CO LTD) 25 January 1988
- PATENT ABSTRACTS OF JAPAN vol. 9, no. 46 (M-360) (1769) February 1985 & JP-A-59 186 725 (NIPPON DENSO K.K.) 23 October 1984

## Description

### BACKGROUND OF THE INVENTION

### Field of the invention

The present invention relates to a base board for use in a speed reducer or the like which drives an output shaft by reducing rotational speed of a motor with a plurality of gears. The present invention is also related to an actuator having a motor that rotates an air flow adjusting damper or the like for automobile air conditioners.

### Description of the Related Art

In a typical air flow adjusting damper for air conditioners for automobiles a motorized actuator apparatus is used in order to operate the damper.

An actuator apparatus of this kind is provided with a motor arranged in a housing case. In the housing case, an output shaft is rotatably supported in link with an air flow adjusting damper by means of an arm. In addition a plurality of gears are assembled so as to connect a rotary shaft of the motor and the output shaft of the apparatus. Further, the housing case includes a built-in electric circuit section to be referred to as a "switch unit."

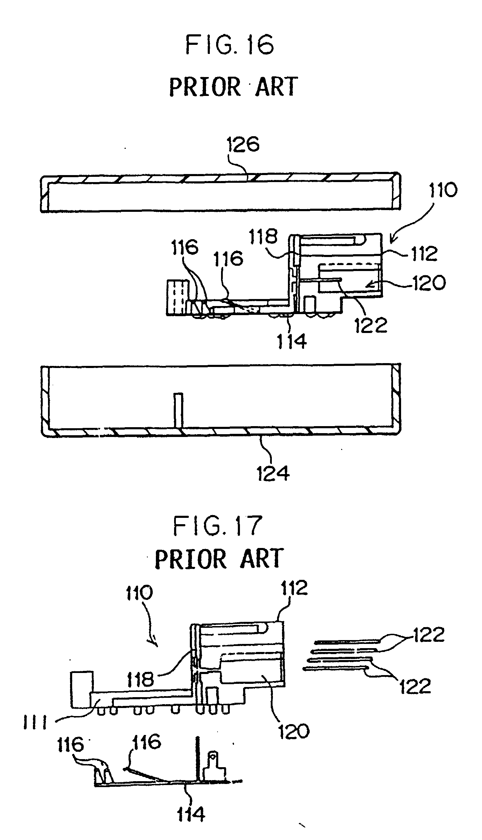

As shown in Figs.16 and 17, a switch unit 110 is composed of a block-shaped insulator 112 made of a resin having a metallic plate 114 heat-caulked thereto. Plate 114 is provided with brushes 116, which extend upward from the upper surface of insulator 112 in a state where plate 114 is fixed to insulator 112. A motor (not shown) is connected to a power supply terminal section 118 of insulator 112 after plate 114 is fixed thereto. Further, a plurality of connect pins 122 are press-fit into plate 114 in a connector section 120 of insulator 112 after plate 114 is fixed to insulator 112, and the fixed connect pins are exposed outside connector section 120. The thus arranged switch unit 110 is accommodated in a housing case 124 which is covered by a cover 126.

In the actuator apparatus, brushes 116 and power supply terminal section 118 are electrically connected via plate 114 to connect pins 122, which in turn are connected to an outside control device. In this arrangement, the motor is supplied with electricity via power supply terminal section 118 while brushes 116 detect a rotational position of an output shaft, so that the motor is rotated under the control of the control device. The rotational force is transmitted through a plurality of gears so that the rotational speed is retarded, which in turn rotates the output shaft to a predetermined position. Thus, the air flow adjusting damper may be moved to a predetermined rotational position.

Meanwhile, the conventional motorized actuator apparatus, as stated above, includes switch unit 110, namely, of insulator 112, plate 114 and a plurality of connect pins 122, in addition to the motor and plural gears. As the apparatus includes many parts to be assembled, assembling performance is poor, which results in increased costs. Further, the plural gears must be assembled independently of switch unit 110. It is also necessary to provide a switch pattern on one of these plural gears as well as provide, on a base 111 of switch unit 110, a plurality of brushes 116 that are in sliding contact with the aforementioned switch pattern. Accordingly, the attachment and positioning of parts are restricted, and thus working performance in assembling is further lowered in this respect.

Moreover, the aforementioned brushes 116 for detecting the rotational position of the motor are fixed to insulator 112, therefore, the pattern for controlling the rotational position of the motor is uniquely limited. In other words, the pattern of the brushes cannot be modified. For example, a different pattern can be used.

US-A-4 795 867 discloses a motor actuator for an air conditioning system comprising a gear supporting section supporting at least one of plural gears that are coupled to a rotary shaft of a motor so as to transmit a rotational force of said motor to an output shaft while reducing the rotational speed; inevitably having a motor power supply terminal section connected to said motor for supplying electricity to said motor; an element terminal section connected to an element used for controlling said motor; and a connector section electrically connected to said motor power supply terminal section and said element terminal section via respective predetermined circuits, and electrically connected with the outside of said base board.

Further, as is stated in the document, the supply voltage to the driving motor is supplied by a power source (not shown) via a connector (not shown) provided integrally with the lower case, a printed circuit board connected to the connector and arranged in the bottom part of the gear housing, and a lead wire connected to the board.
Accordingly as the apparatus includes many parts to be assembled, assembling performance is poor, which results in increased costs.

It is therefore an object of the present invention to provide a base board for use in an actuator apparatus so that the number of parts in said apparatus can be markedly reduced to thereby achieve reduction of costs and excellent assembling performance.

This object is solved by the features of claim 1. Preferred embodiments are subject of the dependent claims.

A first aspect of the present invention resides in that a base board comprises a gear supporting section supporting at least one of a plurality of gears that are coupled to a rotary shaft of a motor so as to transmit a rotational force of the motor to an output shaft while reducing the rotational speed, a motor power supply terminal section connected to the motor for supplying electricity to the motor, an element terminal section connected to an element used for controlling the motor, and a connector section electrically connected to the motor power supply terminal section and the element terminal section via respective predetermined circuits, and electrically connected with the outside of the base board. In the apparatus the gear supporting section, the motor power supply terminal section, the element terminal section and the connector section are integrally provided.

A second aspect of the present invention resides in that the element connected to the element terminal section is a rotational position detecting element by the rotational position detecting element being connected to the element terminal section, the rotational position detecting element is connected mechanically to the output shaft so as to be able to detect a rotational position of the output shaft.

A third aspect of the present invention lies in that a motorized actuator apparatus comprises a motor, a plurality of gears coupled to a rotary shaft of the motor for transmitting a rotational force of the motor to an output shaft while reducing the rotational speed, a rotational position detecting element connected to the output shaft for detecting rotational position of the output shaft, a base board having a gear supporting section supporting at least one of the plurality of gears, a motor power supply terminal section connected to the motor for supplying electricity to the motor, a detecting element terminal section connected to the rotational position detecting element, and a connector section electrically connected to the motor power supply terminal section and the detecting element terminal section via respective predetermined circuits and electrically connected with the outside of the base board. In the apparatus the gear supporting section, the motor power supply terminal section, the detecting element terminal section and the connector section are integrally provided. The motorized actuator apparatus further includes a case member for accommodating the motor, the plurality of gears, the rotational position detecting element and the base board.

In accordance with the first aspect of the invention having a structure described above, at least one of the plural gears as well as the motor and the element are integrally assembled onto the base board. Connect pins provided in the connector section are connected with a connector of an external control device.

Here, since each section is integrally provided onto the base board, the number of parts can be greatly reduced when compared with that in the prior art. As a result, cost can be lowered. In addition, since positions of attachment for all the parts on the base board are defined, resulting in improvement of work performance during assembling. In addition, by previously assembling of one of the plural gears to the gear supporting section a unit can be formed. Further, a different motor, or a different element can be applied to the base board, so that the application of the base board can be widened.

In accordance with the second aspect of the invention, the rotational position detecting device is connected to the element terminal section and coupled mechanically to the output shaft. In other words, only the assembling of the rotational position detecting device allows the coupling with the output shaft, so that the replacement performance of the rotational position detecting device can be improved, and the application can be widened.

In accordance with the third aspect of the invention, at least one of the plural gears is assembled in and supported by the gear supporting section of the base board with sections integrated. The motor is connected to the motor power supply terminal section in the base board so as to be supplied with electricity. The rotational position detecting device is connected to the detecting device terminal section in the base board and coupled to the output shaft. The connector section is connected to a connector of an external control device.

With this arrangement, the rotational force of the motor is transmitted to the output shaft while reducing the rotational speed. The rotational position of the output shaft is detected to control the motor.

Here, since sections are integrally provided onto the base board, the number of parts can be greatly reduced when compared with that in the prior art. As a result, cost can be lowered and work performance during assembling can be improved. In addition, by assembling of one of the plural gears to the gear supporting section a unit can be formed. Further, by only replacing a motor or a rotational position detecting device the apparatus can be adapted to other dampers or the like that have different modes. Accordingly, the range of the application can be widened.

### BRIEF DESCRIPTION OF THE DRAWINGS

Fig.1 is a perspective exploded view of a motorized actuator apparatus in accordance with a first embodiment of the invention;
Fig.2 is a plan view showing an inside structure of a motorized actuator apparatus in accordance with a first embodiment of the invention;
Fig.3 is a vertical section view showing a motorized actuator apparatus in accordance with a first embodiment of the invention shown in Fig.2, taken along line 3-3;
Fig.4 is a plan view showing a base board for use in a motorized actuator apparatus in accordance with a first embodiment of the invention;
Fig.5 is a front view showing a base board for use in a motorized actuator apparatus in accordance with a first embodiment of the invention;
Fig.6 is a rear view of a base board for use in a motorized actuator apparatus in accordance with a first embodiment of the invention;
Fig.7 is a right side view of a base board for use in a motorized actuator apparatus in accordance with a first embodiment of the invention;
Fig.8 is a left side view of a base board for use in a motorized actuator apparatus in accordance with a first embodiment of the invention;
Fig.9 is a bottom view of a base board for use in a motorized actuator apparatus in accordance with a first embodiment of the invention;
Fig.10 is a plan view showing an inside structure of a motorized actuator apparatus in accordance with a second embodiment of the invention;
Fig.11 is a vertical section view showing a motorized actuator apparatus in accordance with a second embodiment of the invention shown in Fig.10, taken along line 11-11;
Fig.12 is a perspective exploded view of a motorized actuator apparatus in accordance with a third embodiment of the invention;
Fig.13 is a perspective view of a base board used in a motorized actuator apparatus in accordance with a third embodiment of the invention;
Fig.14 is a plan view showing an inside structure of a motorized actuator apparatus in accordance with a third embodiment of the invention;
Fig.15 is a vertical section view showing a motorized actuator apparatus in accordance with a third embodiment of the invention shown in Fig.2, taken along line 15-15;
Fig.16 is a vertical section view showing a switch unit for use in a prior art motorized actuator apparatus; and
Fig.17 is an exploded sectional view showing parts of the switch unit of Fig.16.

### DESCRIPTION OF THE PREFERRED EMBODIMENTS

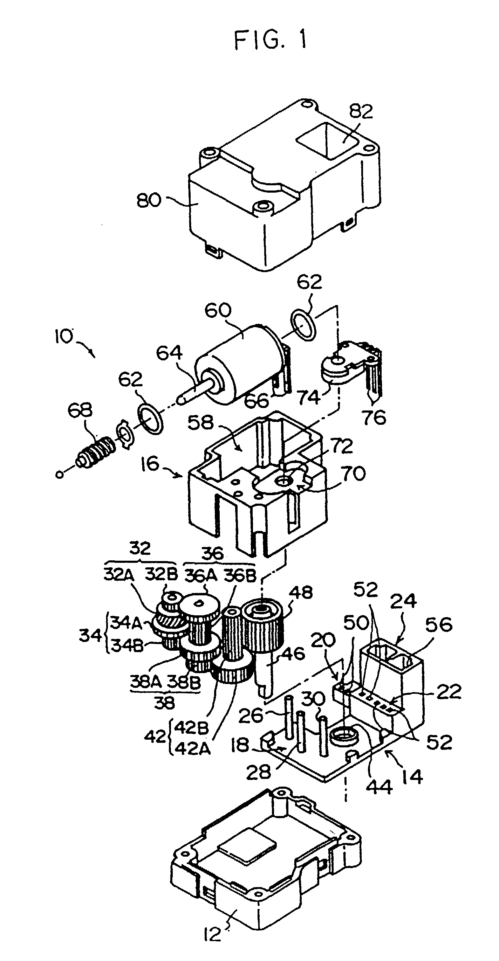

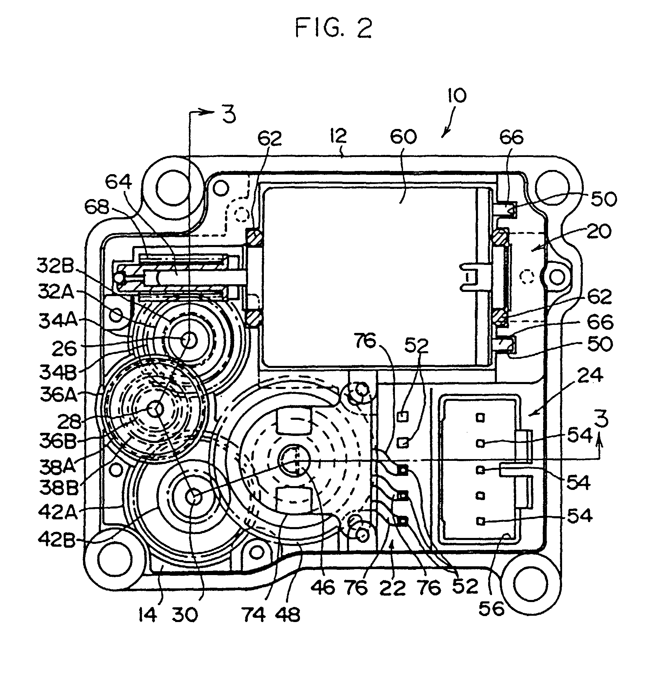

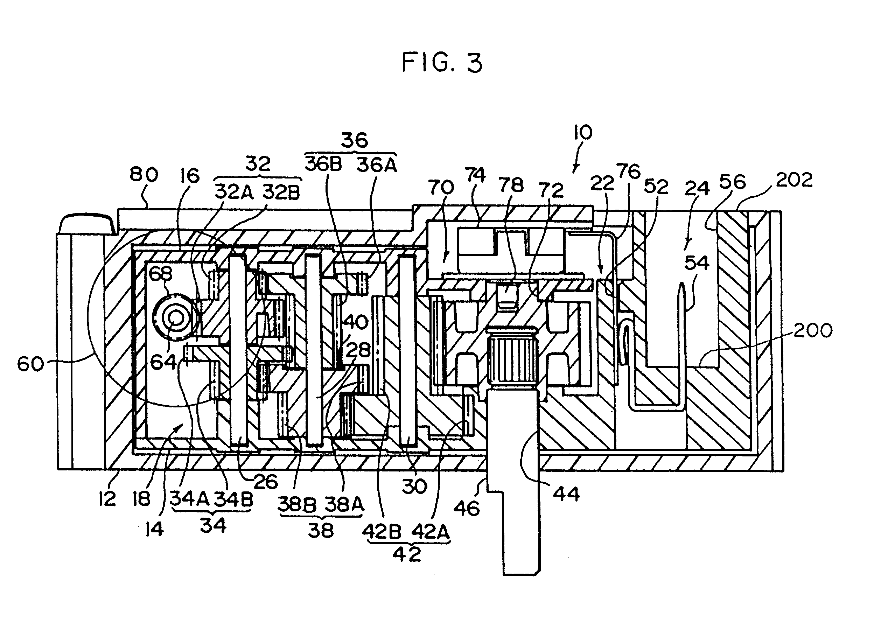

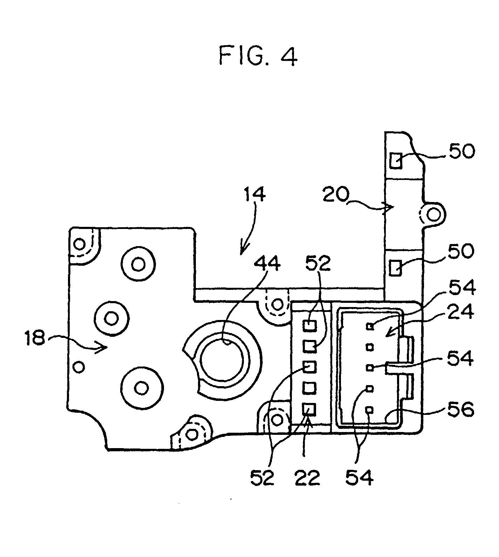

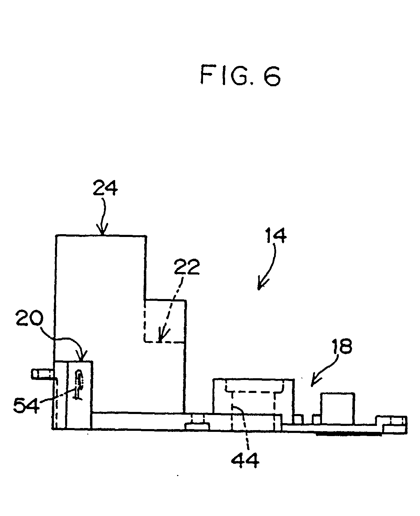

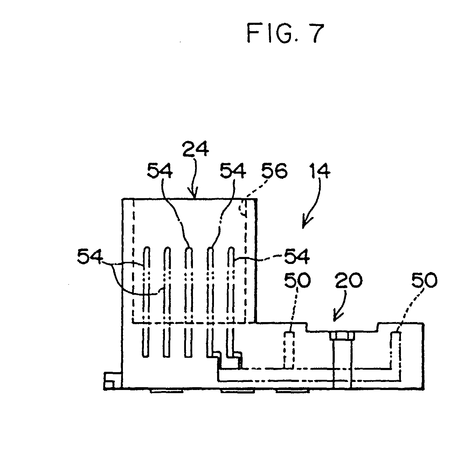

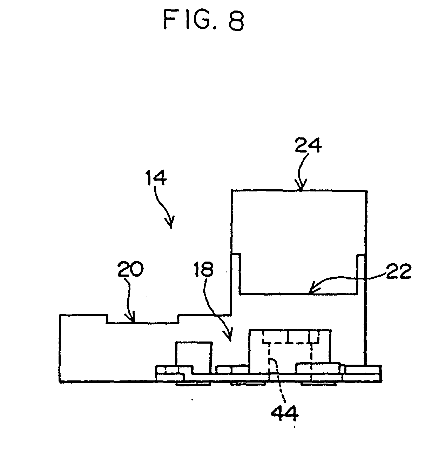

Fig.1 is a perspective exploded view of a motorized actuator apparatus 10 in accordance with a first embodiment of the invention. Fig.2 is a plan view showing an inside structure of actuator apparatus 10, and Fig.3 is a vertical section of actuator apparatus 10, taken along a line 3-3 shown in Fig.2. Figs.4 through 9 are six side views of a base board 14 according to the invention, for use in actuator apparatus 10. In the description of the embodiment of the invention, a vertical direction will be taken perpendicular to the drawing documents of Figs.2, 10 and 14 with the front side and the rear side of the documents being up and down, respectively. Side directions will indicate directions perpendicular to the vertical direction.

Actuator apparatus 10 includes a base board 14 and supporting plate 16 disposed in a box-shaped housing case 12 with an opening in an upper portion. Base board 14 and supporting plate 16 are fit into one another to form a box-like structure.

Base board 14 integrally includes a gear supporting section 18, a power supply terminal section 20, a terminal section 22 and a connector section 24.

Gear supporting section 18 has supporting shafts 26, 28 and 30, all of which are parallel to one another. Supporting shaft 26 is provided with gears 32 and 34. The gear 32 positioned above is composed of a large diameter gear portion 32A and a small diameter gear portion 32B. These gear portions are arranged coaxially to form one body structure. The gear 34 positioned below is supported to rotate relative to the gear 32, and is composed of a large diameter gear portion 34A and a small diameter gear portion 34B. These gear portions are arranged coaxially to form one body structure.

On the other hand, supporting shaft 28 is assembled with gears 36 and 38. Gear 36 is composed of a large diameter gear portion 36A and a relatively longer, small-diameter gear portion 36B. These gear portions are arranged coaxially so as to form one body structure. Gear portion 36A of gear 36 engages gear portion 32B of the gear 32 while gear portion 36B engages at its axially lower portion with gear portion 34A of the gear 34.

Gear 38 positioned below is supported to rotate relative to the gear 36, and is composed of a large diameter gear portion 38A and a small diameter gear portion 38B. These gear portions are arranged coaxially and are integrated. As depicted in detail in Fig.1, a recessed portion 40 (see Fig.3) is provided coaxially to gear portion 38A on a side thereof and adjacent to gear 36 so as to correspond to gear portion 36B of gear 36 (see Fig.3). Recessed portion 40 is designed to be larger in depth (or length in axial direction) than the thrust backlash between gears 36 and 38. Gears 36 and 38 are assembled such that gear portion 36A of gear 36 is inserted into the recessed portion 40. Accordingly, gears 36 and 38 are arranged in such a manner that gear portion 36A can not be drawn out of recessed portion 40 even in the presence of the thrust backlash between gears 36 and 38. Gear portion 38A of the gear 38 is engaged with gear portion 34B of the gear 34.

Supporting shaft 30 is assembled with gear 42. Gear 42 is composed of a large diameter gear portion 42A and a relative longer, small-diameter gear portion 42B. These gear portions are arranged coaxially so as to form one body structure. Gear portion 42A of gear 42 engages gear portion 38B of the gear 38.

A through-hole 44 is formed in a substantially central portion of base board 14 on the side where gear 42 is assembled to supporting shaft 30, to rotatably support a shaft 46 which serves as an output shaft. The shaft 46 is inserted through the through-hole 44 such that an end of the shaft 46 extends through housing case 12 and projects outside of the motorized actuator apparatus 10. The shaft 46 is fixed to an unillustrated arm, which in turn is linked with an air flow adjusting damper or the like. At another end along the axial direction of shaft 46, a gear 48 is provided coaxially in an integrating manner. The gear 48 engages gear portion 42B of the gear 42.

Accordingly, all the gears described above, or gears 32, 34, 36, 38, 42 and 48 constitute a speed reduction mechanism with plural steps. The rotational force of gear 32 is transmitted through each gear to rotate shaft 46.

In the vicinity of an end portion of base board 14, on a side of gear 48 in a state where shaft 46 is inserted through through-hole 44, there are a power supply terminal section 20, a terminal section 22 and a connector section 24 integratively provided.

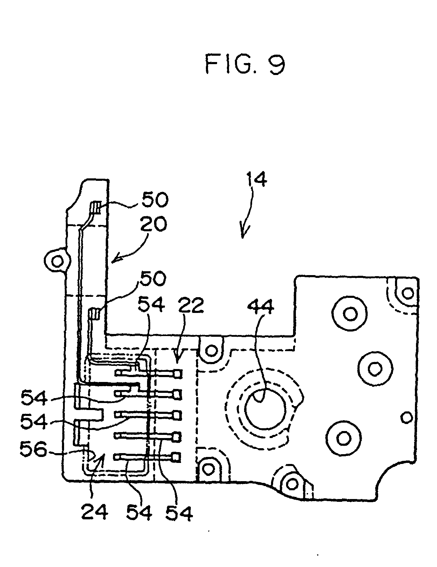

Power supply terminal section 20 is formed with a pair of terminal holes 50, each of which is arranged as shown in Fig.9 to be electrically connected to a respective connect pin 54. The terminal holes 50 correspond a pair of terminals 66 of a motor 60 to be described hereinafter. That is, terminals 66 are fit into terminal holes 50 to create electrical connection. Power supply terminal section 20 serves to supply electricity to motor 60.

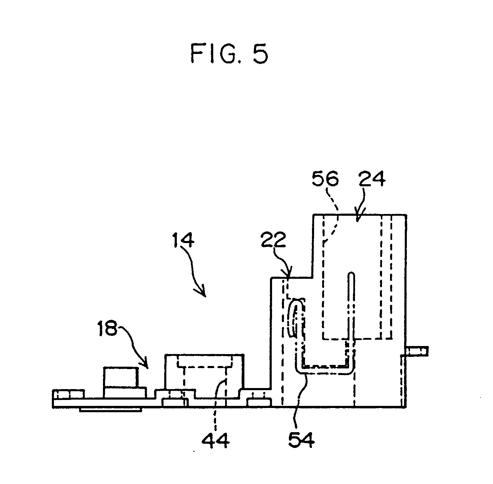

On the other hand, terminal section 22 is formed with a plurality of connect holes 52 (e.g., five holes in this embodiment). As indicated by a double-dot and dash line in Fig.5, a connect pin 54 is arranged in each connect hole 52. Each connect pin 54, made of a thin conductive metal plate, is bent into a U-shape with one end thereof being disposed in correspondence with a respective connect hole 52. Returning to Fig.1, we see that connect holes 52 are provided to correspond with terminals 76 of a potentiometer 74 (to be referred to hereinafter). Terminals 76 are fit into connect holes 52 to create an electric connection. The other ends of connect pins 54 correspond to connector section 24.

Connector section 24 is formed with the wall of an insertion hole 56, serving as an inner peripheral surface of the connector section 24. An unillustrated joint connector is inserted into the insertion hole 56. Connect pin 54 projects out vertically from a bottom portion 200 toward an opening 202 (or upward) inside insertion hole 56. Each of these connect pins 54 is electrically connected with the aforementioned power supply terminal section 20 through a predetermined circuit.

A supporting plate 16 is mutually fit into the base board 14 to which all sections described above are assembled, thereby covering all the sections.

Supporting plate 16 is formed with a motor holding portion 58 for accommodating a motor 60 and is positioned over power supply terminal section 20 on the side of terminal section 22 and connector section 24. Motor 60 is held in so-called "floating support" by means of O-rings 62 that are disposed at both axial ends. A pair of terminals 66 extend from an axial end of motor 60 (or the end portion opposite to a rotary shaft 64). The terminals 66 are inserted into the aforementioned terminal holes 50 of power supply terminal section 20 so that the motor can be held and connected electrically. A worm gear 68 is securely fixed in a integrating manner to a tip portion of rotary shaft 64 of motor 60. Accordingly, the rotational force of motor 60 is transmitted through the gears to rotate shaft 46.

An element holding portion 70 is formed inside supporting plate 16 on the side of motor holding portion 58 at a position facing the shaft 46 (and gear 48) on the upper face of supporting plate 16. Element holding portion 70 is provided with a through-hole 72 coaxially with shaft 46 (and gear 48) and a potentiometer 74. Three terminals 76 extend from potentiometer 74 and are inserted into the connect holes 52 of terminal section 22 so that the potentiometer 74 is held and connected electrically to connect pins 54. At this time, a rotary shaft 78 of potentiometer 74 (refer to Fig.3) passes through through-hole 72 to be coupled to gear 48 (and shaft 46) in an integrating manner. Accordingly, rotary shaft 78 of potentiometer 74 rotates around as shaft 46 rotates, so that the rotational position (or angular position) of shaft 46 can be detected.

A cover 80 is attached to housing case 12 to which all the aforementioned sections are assembled, in order to cover housing case 12. One end of cover 80 is formed with an opening 82 at a position corresponding to connector portion 24 (and insertion hole 56) of base board 14 so as to expose connector portion 24 to the outside.

Now, the operation of the embodiment will be described.

In the thus arranged actuator apparatus 10, motor 60 is electrically connected via power supply terminal section 20 to the corresponding connect pins 54 whereas potentiometer 74 is electrically connected via terminal section 22 to the corresponding connect pins 54. Further, the unillustrated connector is inserted into insertion hole 56 of connector section 24 so that connect pins 54 are connected to an external control apparatus. With such connection, electric power is supplied to motor 60 from power supply terminal section 20 to rotate motor 60. The rotational force of motor 60 is transmitted through worm gear 68, gears 32, 34, 36, 38, 42 and 48 to shaft 46 so as to reduce rotational speed. As a result, shaft 46 is rotated to a predetermined position so as to activate the air flow adjusting damper or the like that is linked with shaft 46.

When shaft 46 is rotated by the rotation of motor 60, the rotary shaft 78 of potentiometer 74 that is integrally coupled to shaft 46 is rotated. Accordingly, the rotational position of shaft 46 can be detected. Based on the detection of the rotational position of rotary shaft 46 the control device controls the motor 60 while it is rotating.

In actuator apparatus 10, since the sections of base board 14, specifically, gear supporting section 18, power supply terminal section 20, terminal section 22 and connector section 24 are integrally arranged, the number of parts can be greatly reduced when compared to that in the prior art, thereby reducing cost. In addition, since the positions of attachment for all the parts on base board 14 are defined and assembling makes it possible to position those parts, improvement of work performance in assembling can be achieved. In addition, the aforementioned gears can be assembled in advance in gear supporting section 18, thereby making it possible to construct the gears as a gear unit. Accordingly, the application can be widened.

Further, in actuator apparatus 10, potentiometer 74 may be assembled in such a manner that terminals 76 are inserted into connect holes 52 of terminal section 22 disposed on base board 14 so as to be held while rotary shaft 78 is integrally coupled to gear 48 (and shaft 46). In other words, a single step of assembling may complete both electric and mechanical connections. Therefore, work performance in assembling or replacing the potentiometer 74 can be improved. Moreover, only the replacement of potentiometer 74 enables the whole apparatus to be adapted to different kinds of dampers or the like. Therefore, the application range can be expanded.

Next, a second embodiment of the invention will be described. In the following description, the basically same components as those in the first embodiment will be allotted with the same reference numerals as used in the first embodiment. A description, therefore, will be omitted.

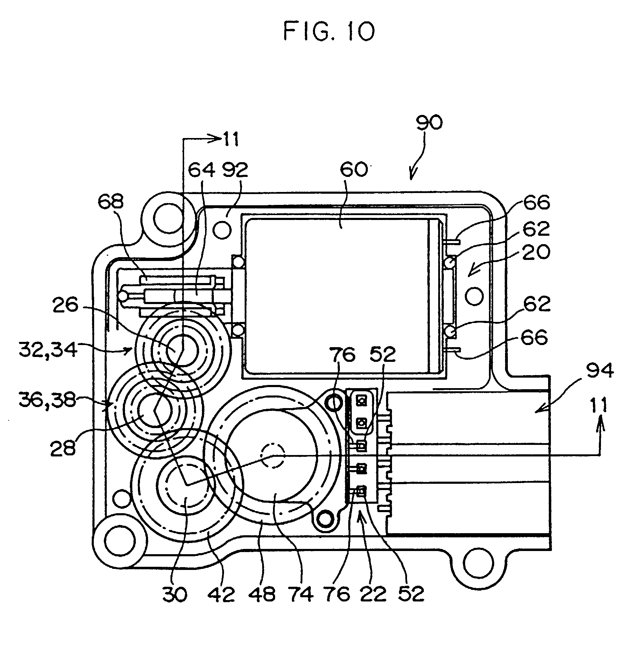

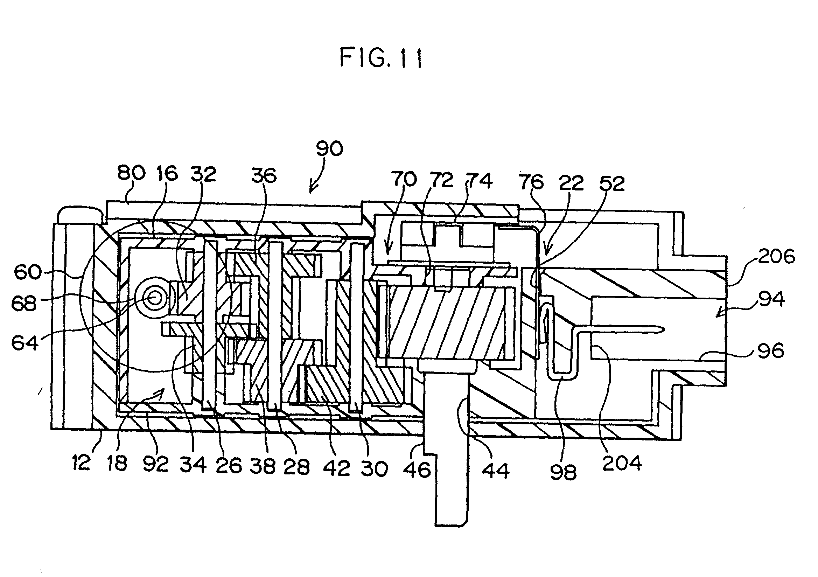

Fig.10 is a plan view of a motorized actuator apparatus 90 in accordance with a second embodiment of the invention. Fig.11 is a vertical section view of actuator apparatus 90, taken along line 11-11 shown in Fig.10.

In the actuator apparatus 90, a shaft 46 passes through a through-hole 44, and in this state, a connector section 94 is disposed integrally in the vicinity of the end portion of a base board 92 on the side of a gear 48. Connector section 94 is different from its counterpart of the first embodiment, and is provided with an insertion hole 96 that is horizontally opened from one end of base board 96 toward the side direction.

Each connect pin 98 is, in contrast with connect pin 54 of the first embodiment, bent at its middle portion at a substantially right angle and extends horizontally. The tip of connect pin 98 thus bent horizontally corresponds to the connector section 94. Connector pin 98 protrudes out from a bottom portion 204 in insertion hole 96, serving as an inner peripheral surface of the connector section 94, to an opening portion 206 (or horizontally).

The actuator apparatus 90 differs from the actuator apparatus 10 of the first embodiment only in the formation of connector section 94 provided in base board 92, or more specifically, the opening direction of insertion hole 96, everything else is completely identical. Accordingly, since sections of base board 92, more specifically, gear supporting section 18, power supply terminal section 20, terminal section 22 and connector section 94 are integrally arranged, the number of parts can be greatly reduced when compared to that in the prior art. Thus low cost and improvement in work performance in assembling can be realized. In addition, the aforementioned gears can be assembled in advance in gear supporting section 18, thereby making it possible to construct the gears as a gear unit.

Further, potentiometer 74 can be easily replaced, and only the replacement of the potentiometer 74 enables the whole apparatus to be applied to different kinds dampers or the like. The application range can therefore be expanded.

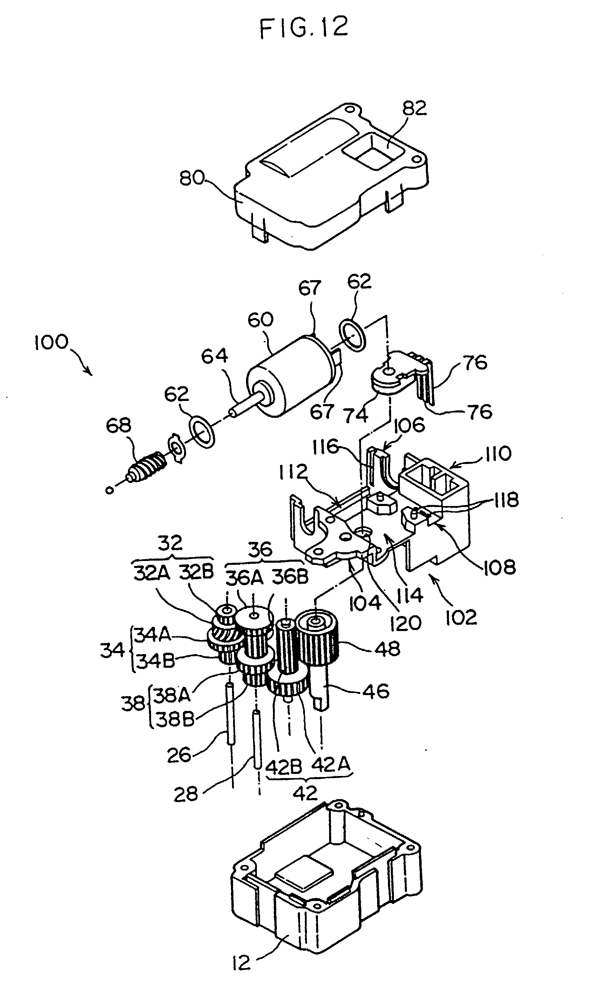

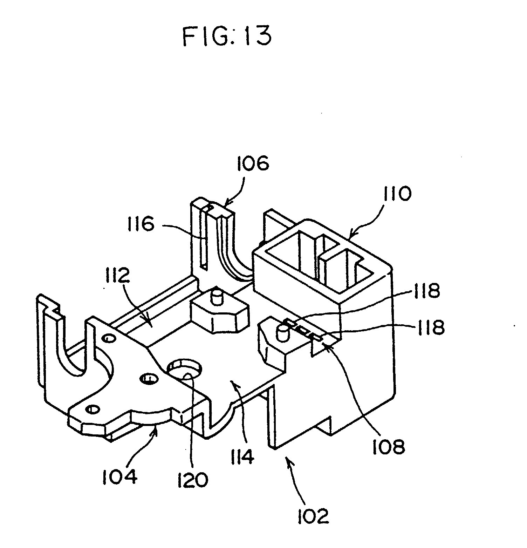

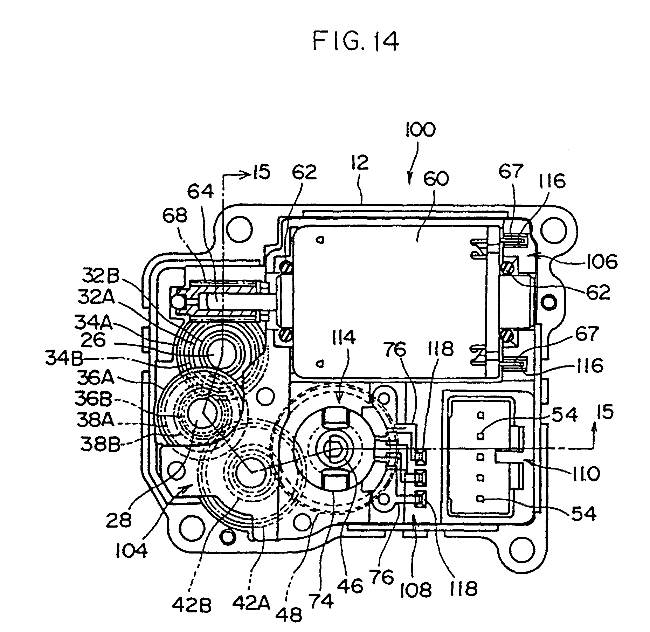

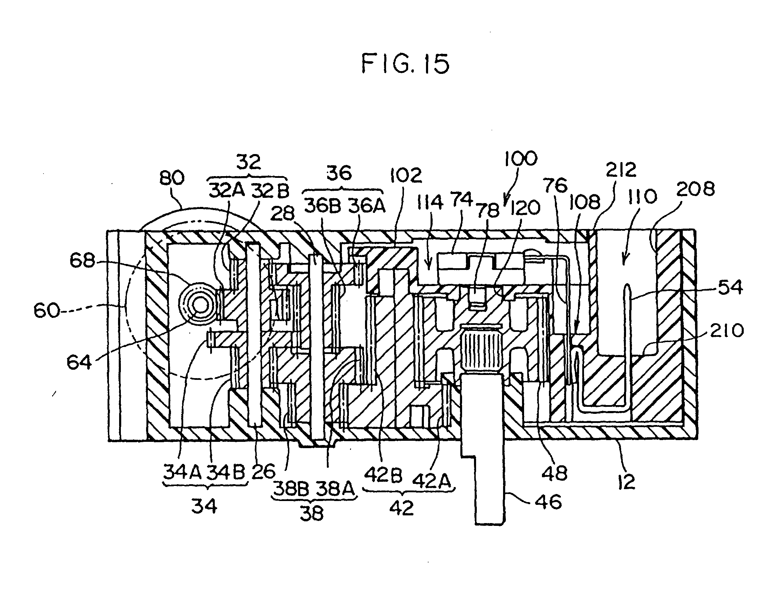

Next, a description will be made of a motorized actuator apparatus 100 in accordance with a third embodiment of the invention. Fig.12 shows a perspective exploded view of actuator apparatus 100 in accordance with the embodiment. Fig.13 is a perspective view showing a base board 102 used in actuator apparatus 100 according to the third embodiment. Fig.14 is a perspective view showing an inside structure of actuator apparatus 100, and Fig.15 is a vertical section view of actuator apparatus 100, taken along a line 15-15 shown in Fig.14.

Actuator apparatus 100 includes a base board 102 disposed in a box-shaped housing case 12 having an opening in the upper side. Base board 102, like the base board 14 of actuator apparatus 10 according to the above-described first embodiment, has a gear supporting section 104, a power supply terminal section 106, a terminal section 108 and a connector section 110 integrally provided thereon. The base board further includes a motor holding portion 112 and element holding portion 114 which are integrally provided.

More specifically, gear supporting section 104 of base board 102 extends outward so as to oppose the bottom wall of housing case 12. Between the gear supporting section 104 and the bottom wall of housing case 12 there are assembled a gear 42, a gear 48 (and a shaft 46) in the same manner as in the above first embodiment. Here, gear 42 is integrally formed by gear portions 42A and 42B and a shaft portion, so that a supporting shaft 30 is omitted. On the other hand, gears 32, 34 and a supporting shaft 26, and gears 36, 38 and a supporting shaft 28 are assembled in the side of gear supporting section 104 between the bottom wall of housing case 12 and a cover 80.

In the vicinity of the end portion of base board 102 on the side of gear supporting section 104, a power supply terminal section 106, a terminal section 108 and a connector section 110 are integrally provided.

Power supply terminal section 106 has a pair of terminal grooves 116 formed therein. The pair of terminal grooves 116 corresponds to a pair of terminals 67 provided on a motor 60 which is similar to that of the first embodiment and is accommodated in a motor holding portion 112 (to be referred to later). That is, terminals 67 are fit into the grooves to create electric connection. Terminal 108 is formed with a plurality of connect holes 118 (e.g., three connect holes in this embodiment). These connect holes 118 also correspond to terminals 76 of a potentiometer 74 as in the first embodiment. Terminals 76 are fit into the corresponding connect holes to create electric connection. Connector section 110 is formed with an insertion hole 208, serving as an inner peripheral surface of the connector section 110. An unillustrated joint connector is inserted into the insertion hole 208, and connect pins 54 are projected out from a bottom 210 inside insertion port 208 toward an opening portion 212.

A motor supporting portion 112 is formed, like the motor supporting portion 58 of supporting plate 16 in the first embodiment, in a position corresponding to power supply terminal section 106 on the side of gear supporting section 104, terminal section 108 and connector section 110. A motor 60 is accommodated in the motor supporting portion 112 while terminals 67 are inserted into terminal groove 116 of power supply terminal section 106 so that the motor is held and connected electrically.

An element holding portion 114, like element holding portion 70 provided in supporting plate 16 in the first embodiment, is formed on the upper surface of gear supporting section 104 on the side of motor holding portion 112, at a position facing the shaft 46 (and gear 48). Element holding portion 114 is provided with a through-hole 120 coaxially with shaft 46 (and gear 48) and a potentiometer 74.

As has been described, motor supporting portion 112 and element holding portion 114, respectively corresponding to motor holding portion 58 of supporting plate 16 and elemental device holding portion 70 in the first embodiment, are integrally both provided on base board 102 of actuator apparatus 100. Therefore, in actuator apparatus 100, the part that corresponds to supporting plate 16 is eliminated while the other function being reserved.

Accordingly, in actuator apparatus 100, the number of parts can be reduced still more when compared to that in the prior art, so as to realize low cost and improve the work performance in assembling. Further, potentiometer 74 can be replaced easily, so that only the replacement of potentiometer 74 enables the whole apparatus to be applied to different kinds of dampers or the like. Therefore, the application range can be expanded.

In this actuator apparatus 100, a connector section 110 can be constructed such as to be opened horizontally on one side end of base board 102 as in the second embodiment.

## Claims

1. A base board (14, 92, 102) comprising :
a gear supporting section (18, 104) supporting at least one of plural gears (32, 34, 36, 38, 42, 48) that are coupled to a rotary shaft (64) of a motor (60) so as to transmit a rotational force of said motor to an output shaft (46) while reducing the rotational speed;
a motor power supply terminal section (20, 106) connected to said motor (60) for supplying electricity to said motor;
an element terminal section (22, 108) connected to an element (74) used for controlling said motor (60); and
a connector section (24, 94, 110) electrically connected to said motor power supply terminal section (20) and said element terminal section (22) via respective predetermined circuits, and electrically connected with the outside of said base board;
characterized in that
at least parts of said gear supporting section (18, 104), said motor power supply terminal section (20, 106), said element terminal section (22, 108) and said connector section (24, 94, 110), respectively, are formed together as one whole.

2. A base board according to claim 1, wherein said element connected to said element terminal section (22, 108) is a rotational position detecting element (74), said rotational position detecting element is connected to said element terminal section (22), and said rotational position detecting element (74) is connected mechanically to said output shaft (46) so as to be able to detect a rotational position of said output shaft (46).

3. A base board according to claim 1, wherein said gear supporting section (18, 104) is provided with at least one supporting shaft (26, 28, 30) in correspondence with the number of said plurality of gears.

4. A base board according to claim 1, wherein said motor power supply terminal section (20, 106) is connected to a motor (60) in such a manner that a plurality of terminals (66) provided for said motor (60) are inserted into said motor power supply terminal section (20, 106) by moving said motor (60) so as to substantially parallel to axes of said terminals (66).

5. A base board according to claim 1, wherein said motor power supply terminal section (20, 106) is connected to a motor (60) in such a manner that a plurality of terminals (66) provided for said motor (60) are inserted into said motor power supply terminal section (20, 106) by moving said motor (60) in a substantially perpendicular direction to axial direction of said terminals (66).

6. A base board according to claim 1, wherein said connector section (24) comprises a bottom portion (200) which is provided with at an inner peripheral surface of said connector section (24) and comprises an opening portion (202), and a direction from said bottom portion (200) to said opening portion (202) is substantially parallel to an axis of said output shaft (46) of said motor (60).

7. A base board according to claim 1, wherein said connector section comprises (94) a bottom portion (204) which is provided at an inner peripheral surface of said connector section (94) and comprises an opening portion (206) , and a direction from said bottom portion (204) to said opening portion (206) is substantially perpendicular to an axis of said output shaft (46) of said motor (60).

8. A base board according to claim 1, further comprising:
an element holding section (70) for holding said element (74) used for controlling said motor (60), wherein said element holding section (70) has a through-hole (72) for allowing said output shaft (46) to couple with an element rotation axis (78) provided for said element (74).

9. A base board according to claim 1, further comprising:
a motor holding portion (58) for holding said motor (60).

10. A motorized actuator apparatus comprising:
a motor (60);
a plurality of gears (32, 34, 36, 38, 42, 48) coupled to a rotary shaft (64) of said motor (60) for transmitting a rotational force of said motor to an output shaft (46) while reducing the rotational speed;
a rotational position detecting element (74) connected to said output shaft (46) for detecting rotational position of said output shaft;
a base board (14, 92, 102) according to one of the claims 1 - 9, and
a case member (12) for accommodating said motor, said plurality of gears, said rotational position detecting element and said base board.

11. An actuator apparatus according to claim 10, wherein said gear supporting section (18, 102) is provided with at least one supporting shaft (26, 28, 30) in correspondence with the number of said plurality of gears.

12. An actuator apparatus according to claim 10, wherein said connector section (24, 94, 110) of said base board is exposed to outside of said case member.

13. An actuator apparatus according to claim 10, wherein said case member supports at least one of said plurality of gears other than said at least one gear that is supported by said gear supporting section (18, 104) of said board.

14. An actuator apparatus according to claim 10, wherein said base board (14, 92, 102) further comprises a motor holding portion (58) for holding said motor (60) and a detecting element holding section (70) for holding said rotational position detecting element (74), said detecting device holding section having a through-hole (72) for connecting said output shaft (46) with a detecting element rotational axis provided for said rotational position detecting element (74).

15. An actuator apparatus according to claim 10, further comprising a box-like member (16) provided separately from said base board (14), wherein said box-like member comprises a motor holding portion (58)for holding said motor and a detecting element holding portion (70) for holding said rotational position detecting element, said detecting element holding portion (70) having a through-hole (72) for allowing said output shaft to connect with a detecting element rotational axis provided for said rotational position detecting element.

16. An actuator apparatus according to claim 15, wherein said box-like member supports at least one of said plurality of gears in cooperation with said base board.

## Patentansprüche

1. Basisboden (14, 92, 102), der umfasst:
einen getriebetragenden Abschnitt (18, 104), der mindestens eines von mehreren Getrieben (32, 34, 36, 38, 42, 48) trägt, das an einen rotierenden Schaft (64) eines Motors (60) gekoppelt ist, um eine Rotationskraft des Motors auf eine Hauptwelle (46) zu übertragen, während die Rotationsgeschwindigkeit verringert wird;
einen Motorenergieversorgungsanschlussabschnitt (20, 106), der mit dem Motor (60) verbunden ist, um Elektrizität an den Motor zu liefern;
einen Elementanschlussabschnitt (22, 108), der mit einem für die Überwachung des Motors (60) verwendeten Element (74) verbunden ist; und
einen Verbindungsabschnitt (24, 94, 110), der elektrisch mit dem Motorenergieversorungsanschlussabschnitt (20) und dem Elementanschlussabschnitt (22) über entsprechende vorbestimmte Kreisläufe verbunden ist und elektrisch mit dem Äusseren des Basisbodens verbunden ist;
dadurch gekennzeichnet, dass
mindestens Teile des getriebetragenden Abschnitts (18, 104), des Motorenergieversorgungsanschlussabschnitts (20, 106), des Elementanschlussabschnitts (22,108) bzw. des Verbindungsabschnitts als Einheit gebildet sind.

2. Basisboden nach Anspruch 1, wobei das mit dem Elemantanschlussabschnitt (22,108) verbundene Element ein rotierender Postionsfühler (74) ist, wobei der rotierende Positionsfühler mit dem Elementanschlussabschnitt (22) verbunden ist und der rotierende Positionsfühler (74) mechanisch mit der Hauptwelle (46) verbunden ist, um die Rotationsposition der Hauptwelle (46) ermitteln zu können.

3. Basisboden nach Anspruch 1, wobei der getriebetragende Abschnitt (18,104) mit mindestens einem Stützschaft (26, 28, 30), entsprechend der Anzahl der Getriebe, geschaffen wird.

4. Basisboden nach Anspruch 1, wobei der Motorenergieversorgungsanschlussabschnitt (20,106) mit einem Motor (60) derart verbunden ist, dass die Anzahl der für den Motor (60) geschaffenen Anschlüsse (66) in den Motorenergieversorgungsanschlussabschnitt (20,106) eingeführt sind, indem der Motor (60) im wesentlichen parallel zu den Achsen der Anschlüsse bewegt wird.

5. Basisboden nach Anspruch 1, wobei der Motorenergieversorgungsanschlussabschnitt (20,106) mit einem Motor (60) derart verbunden ist, dass die Anzahl der Anschlüsse (66), die für den Motor (60) geschaffen worden sind, in den Motorenergieversorgungsanschlussabschnitt (20, 106) eingeführt sind, indem der Motor (60) im wesentlichen in senkrechter Richtung zur axialen Richtung der Anschlüsse (66) bewegt wird.

6. Basisboden nach Anspruch 1, wobei der Verbindungsabschnitt (24) einen Bodenabschnitt (200) aufweist, der mit an einer Innenumfangsoberfläche des Verbindungsabschnitts (24) geschaffen ist und einen Öffnungsabschnitt (202) aufweist und der Verlauf vom Bodenabschnitt (200) zum Öffnungsabschnitt (202) im wesentlichen parallel zu einer Achse der Hauptwelle (46) des Motors (60) ist.

7. Basisboden nach Anspruch 1, wobei der Verbindungsabschnitt (94) einen Bodenabschnitt (204) aufweist, der an einer Innenumfangsoberfläche des Verbindungsabschnitts (94) geschaffen ist und einen Öffnungsabschnitt (206) aufweist und der Verlauf vom Bodenabschnitt (204) zum Öffnungsabschnitt (206) im wesentlichen senkrecht zu einer Achse der Hauptwelle (46) des Motors (60) ist.

8. Basisboden nach Anspruch 1, der ferner umfasst: einen Elementhalteabschnitt (70) zum Halten des Elements (74), das zum Überwachen des Motors (60) verwendet wird, wobei der Elementhalteabschnitt (70) ein Durchgangsloch (72) aufweist, um der Hauptwelle (46) zu ermöglichen, sich mit einer für das Element (74) geschaffenen Elementsrotationsachse (78) zu verbinden.

9. Basisboden nach Anspruch 1, der ferner umfasst: einen Motorhalteabschnitt (58) zum Halten des Motors (60).

10. Motorisierte Stellvorrichtung, die umfasst:
einen Motor (60);
viele an einen rotierendenden Schaft (64) des Motors (60) gekoppelte Getriebe (32, 34, 36, 38, 42, 48) zum Übertragen einer Rotationskraft des Motors auf eine Hauptwelle (46) während die Rotationsgeschwindigkeit verringert wird;
ein rotierender Positionsfühler (74), der mit der Hauptwelle (46) zum Bestimmen der Rotationsposition der Hauptwelle verbunden ist;
ein Basisboden (14, 92, 102) nach einem der Ansprüche 1 bis 9, und
einen Gehäuseabschnitt (12) zum Aufnehmen des Motors, der Anzahl der Getriebe, des rotierenden Positionsfühlers und des Basisbodens.

11. Stellvorrichtung nach Anspruch 10, wobei der getriebetragende Abschnitt (18,102) mit mindestens einem Stützschaft (26, 28, 30) entsprechend der Anzahl der Getriebe geschaffen ist.

12. Stellvorrichtung nach Anspruch 10, wobei der Verbindungsabschnitt (24, 94, 110) des Basisbodens an der Aussenseite des Gehäuseabschnitts angeordnet ist.

13. Stellvorrichtung nach Anspruch 10, wobei der Gehäuseabschnitt mindestens eines der Getriebe ausser dem mindestens einen Getriebe, das von dem getriebetragenden Abschnitt (18,104) des Bodens getragen wird, trägt.

14. Stellvorrichtung nach Anspruch 10, wobei der Basisboden (14, 92, 102) ferner einen Motorhalteabschnitt (58) zum Halten des Motors (60) und einen Fühlerhalteabschnitt (70) zum Halten des rotierenden Positionsfühlers (74) aufweist, wobei der Fühlervorrichtungshalteabschnitt ein Durchgangsloch (72) zum Verbinden der Hauptwelle (46) mit einer für das rotierende Positionsfühlerelement (74) geschaffenen Rotationsachse des Fühlerelements aufweist.

15. Stellvorrichtung nach Anspruch 10, die ferner ein kastenförmiges Teil (16), das getrennt vom Basisboden (14) geschaffen ist, aufweist, wobei das kastenförmige Teil einen Motorhalteabschnitt (58) zum Halten des Motors und einen Fühlerhalteabschnitt (70) zum Halten des rotierenden Positionsfühlers aufweist, wobei der Fühlerhalteabschnitt (70) ein Durchgangsloch (72) aufweist, um eine Verbindung der Hauptwelle mit einer für den rotierenden Positionsfühler geschaffenen Rotationsachse des Fühlerelements zu ermöglichen.

16. Stellvorrichtung nach Anspruch 15, wobei das kastenförmige Teil mindestens eines der vielen Getriebe zusammen mit dem Basisboden trägt.

## Revendications

1. Plaque de base (14, 92, 102) comprenant :
une section formant support (18, 104) d'engrenage supportant plusieurs roues d'engrenage (32, 34, 36, 38, 42, 48) au nombre d'au moins une qui sont couplées à l'arbre tournant (64) d'un moteur (60) afin de transmettre une force de rotation dudit moteur à un arbre (46) de sortie tout en réduisant la vitesse de rotation;
une section formant borne d'alimentation électrique (20, 106) pour moteur connectée audit moteur (60) et destinée à fournir de l'électricité audit moteur;
une section formant borne (22, 108) pour élément connectée à un élément (74) servant à commander ledit moteur (60); et
une section formant connecteur (24, 94, 110) connectée électriquement à ladite section formant borne d'alimentation électrique (20) pour moteur et à ladite section formant borne (22) pour élément via des circuits prédéterminés respectifs, et connectée électriquement avec l'extérieur de ladite plaque de base;
caractérisée en ce que
des parties au moins de ladite section formant support (18, 104) d'engrenage, de ladite section formant borne d'alimentation électrique (20, 106) pour moteur, de ladite section formant borne (22, 108) pour élément et de ladite section formant connecteur (24, 94, 110), respectivement, sont formées ensemble d'un seul bloc.

2. Plaque de base selon la revendication 1, dans laquelle ledit élément connecté à ladite section formant borne (22, 108) pour élément est un élément de détection (74) de position de rotation, ledit élément de détection de position de rotation étant connecté à ladite section formant borne (22) pour élément, et ledit élément de détection (74) de position de rotation étant connecté mécaniquement audit arbre (46) de sortie afin de pouvoir détecter une position de rotation dudit arbre (46) de sortie.

3. Plaque de base selon la revendication 1, dans laquelle ladite section formant support (18, 104) d'engrenage est pourvue d'au moins un arbre support (26, 28, 30) en correspondance avec le nombre de roues de ladite pluralité de roues d'engrenage.

4. Plaque de base selon la revendication 1, dans laquelle ladite section formant borne d'alimentation électrique (20, 106) pour moteur est connectée à un moteur (60) de manière à ce qu'une pluralité de bornes (66) prévues pour ledit moteur (60) soient insérées dans ladite section formant borne d'alimentation électrique (20, 106) pour moteur en déplaçant ledit moteur (60) afin de le placer de manière sensiblement parallèle aux axes desdites bornes (66).

5. Plaque de base selon la revendication 1, dans laquelle ladite section formant borne d'alimentation électrique (20, 106) pour moteur est connectée à un moteur (60) de manière à ce qu'une pluralité de bornes (66) prévues pour ledit moteur (60) soient insérées dans ladite section formant borne d'alimentation électrique (20, 106) pour moteur en déplaçant ledit moteur (60) dans une direction sensiblement perpendiculaire à la direction axiale desdites bornes (66).

6. Plaque de base selon la revendication 1, dans laquelle ladite section formant connecteur (24) comprend une partie inférieure (200) qui est prévue dans une surface périphérique interne de ladite section formant connecteur (24) et comprend une partie ouvrante (202), et une direction allant de ladite partie inférieure (200) à ladite partie ouvrante (202) est sensiblement parallèle à un axe dudit arbre (46) de sortie dudit moteur (60).

7. Plaque de base selon la revendication 1, dans laquelle ladite section formant connecteur comprend (94) une partie inférieure (204) qui est prévue dans une surface périphérique interne de ladite section formant connecteur (94) et comprend une partie ouvrante (206), et une direction allant de ladite partie inférieure (204) à ladite partie ouvrante (206) est sensiblement perpendiculaire à un axe dudit arbre (46) de sortie dudit moteur (60).

8. Plaque de base selon la revendication 1, comprenant de plus une section de maintien (70) pour élément destinée à maintenir ledit élément (74) servant à commander ledit moteur (60), dans laquelle ladite section de maintien (70) pour élément comporte un trou traversant (72) destiné à permettre audit arbre (46) de sortie de s'accoupler avec un axe de rotation (78) pour élément prévu pour ledit élément (74).

9. Plaque de base selon la revendication 1, comprenant de plus une partie de maintien (58) pour moteur destinée à maintenir ledit moteur (60).

10. Dispositif d'actionnement motorisé comprenant :
un moteur (60);
une pluralité de roues d'engrenage (32, 34, 36, 38, 42, 48) couplées à l'arbre tournant (64) dudit moteur (60) afin de transmettre une force de rotation dudit moteur à un arbre (46) de sortie tout en réduisant la vitesse de rotation;
un élément de détection (74) de position de rotation connecté audit arbre (46) de sortie afin de détecter une position de rotation dudit arbre de sortie;
une plaque de base (14, 92, 102) selon l'une quelconque des revendications 1 à 9, et
un organe formant boîtier (12) servant à loger ledit moteur, ladite pluralité de roues d'engrenage, ledit élément de détection de position de rotation et ladite plaque de base.

11. Dispositif d'actionnement selon la revendication 10, dans lequel ladite section formant support (18, 102) d'engrenage est pourvue d'au moins un arbre support (26, 28, 30) en correspondance avec le nombre de roues de ladite pluralité de roues d'engrenage.

12. Dispositif d'actionnement selon la revendication 10, dans lequel ladite section formant connecteur (24, 94, 110) de ladite plaque de base est exposée à l'extérieur dudit organe formant boîtier.

13. Dispositif d'actionnement selon la revendication 10, dans lequel ledit organe formant boîtier supporte au moins une roue de ladite pluralité de roues d'engrenage, autre que ladite roue d'engrenage au nombre d'au moins une qui est supportée par ladite section formant support (18, 104) d'engrenage de ladite plaque.

14. Dispositif d'actionnement selon la revendication 10, dans lequel ladite plaque de base (14, 92, 102) comprend de plus une partie de maintien (58) pour moteur destinée à maintenir ledit moteur (60) et une section de maintien (70) pour élément de détection destinée à maintenir ledit élément (74) de détection de position de rotation, ladite section de maintien pour élément de détection comportant un trou traversant (72) destiné à connecter ledit arbre (46) de sortie avec un axe de rotation d'élément de détection prévu pour ledit élément (74) de détection de position de rotation.

15. Dispositif d'actionnement selon la revendication 10, comprenant de plus un organe formant boîte (16) prévu séparément de ladite plaque de base (14), dans lequel ledit organe formant boîte comprend une partie de maintien (58) pour moteur destinée à maintenir ledit moteur et une section de maintien (70) pour élément de détection destinée à maintenir ledit élément de détection de position de rotation, ladite section de maintien (70) pour élément de détection comportant un trou traversant (72) destiné à permettre audit arbre de sortie de se connecter avec un axe de rotation d'élément de détection prévu pour ledit élément de détection de position de rotation.

16. Dispositif d'actionnement selon la revendication 15, dans lequel ledit organe formant boîte supporte au moins une des roues de ladite pluralité de roues d'engrenage en coopération avec ladite plaque de base.
